# EUROPEAN PATENT APPLICATION

(11) **EP 3 522 006 A1**
(43) Date of publication of application: **07.08.2019**
(21) Application number: 18305105.1
(22) Date of filing: 01.02.2018
(51) Int. Cl.: G06F 9/30, G06F 21/12, G06F 21/14, G06F 8/52

(54) **METHOD FOR PROTECTING AN EXECUTABLE CODE**

(71) Applicant: GEMALTO SA, 92190 Meudon (FR); SFNT Germany GmbH, 81541 Munchen (DE)
(72) Inventor: GARREAU, Eric, 13881 Gemenos Cedex (FR); VOLPE, Sébastien, 13881 Gemenos Cedex (FR); GARBA, Peter, 81541 Munich (DE)
(74) Representative: Grevin, Emmanuel

(57) **Abstract**

A method for transforming an executable code (10), said method comprising a step of identifying a set of portions (P1, P2, P3) of said executable code to be replaced,
a step of automatically analyzing the executable code and identifying a collection of sequences (S1, S2, S3) of instructions that end in an unconditional transfer of control, said sequences being included in the executable code only, and
a step of generating an updated executable code (20) by replacing each of said portions by an entity which may be either an indirection to one of said sequences or a series of indirections to sequences of the collection, the entity providing an equivalent functionality to that of the portion it replaces.

## Description

### (Field of the invention)

The present invention relates to the field of software protection, and more particularly of obfuscation techniques. It relates particularly to methods of protecting a software component by transforming its executable code.

### (Background of the invention)

Nowadays many services are provided to users by running software applications. Such applications may run on various devices, mobile or not, such as desktop computers, laptops, point of sale terminals or smartphones. They may run locally or be implemented across a network like a LAN or the Internet. Software applications may be run in unsecured environments where an attacker may gain some control (or even full control) of the operation of the system running the application. Consequently, secure applications need to implement some security mechanisms in order to protect data handled by the application from being read or modified by an attacker.

A hacker may try to understand the operation of a software component by reverse-engineering of the compiled code executed by the system. He may then access secure information handled by the software and/or modify the software in order to perform malicious operations. Such a reverse-engineering is usually performed using tools, such as code analyzers and debuggers, that extract, from a compiled code, information about the operations of the code, such as a control flow graph describing the order of execution of instructions in the code.
In order to prevent analyzing of a software code by a malevolent person, software protection techniques have been developed, known as obfuscation. They rely on a set of transformation applied to the original code. Unfortunately, deobfuscator tools have been developed. Such tools make it possible to circumvent most of the protections put in place by the traditional techniques of obfuscation.

Consequently, there is a need for a method allowing to enhance protection of an executable code against known reverse-engineering techniques.

### (Summary of the Invention)

The invention aims at solving the above mentioned technical problem.

An object of the present invention is a method for transforming an executable code. The method comprises a step of identifying a set of portions of the executable code to be replaced. The method comprises a step of automatically analyzing the executable code and identifying a collection of sequences of instructions that end in an unconditional transfer of control, said sequences being included in the executable code only. The method comprises a step of generating an updated executable code by replacing each of said portions by an entity which may be either an indirection to one of said sequences or a series of indirections to sequences of the collection, the entity providing an equivalent functionality to that of the portion it replaces.

Advantageously, the method may comprise a step of inserting a dead code in the executable code when generating said executable code wherein at least one of said sequences belongs to the dead code.

Advantageously, the sequences may be Return Oriented Programming gadgets.

Advantageously, the sequences may be Jump Oriented Programming gadgets.

Another object of the invention is a device including a non-volatile memory storing the updated executable code generated according to the invention.

Another object of the invention is a system for transforming an executable code in which a set of portions to be replaced has been identified. The system comprises a processor and a software application configured to automatically analyze the executable code and to identify a collection of sequences of instructions that ends in an unconditional transfer of control, said sequences belonging to the executable code only. The software application is configured to generate an updated executable code by replacing each of said portions by an entity which may be either an indirection to one of said sequences or a series of indirections to sequences of the collection, the called entity providing an equivalent functionality to that of the portion it replaces. The software application is executed by the processor.

Advantageously, the software application may be configured to check whether the collection of sequences is sufficient to perform replacement of all the portions of the set and to insert a dead code comprising the missing sequences in the executable code.

Advantageously, the sequences may be Return Oriented Programming gadgets or Jump Oriented Programming gadgets.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of an original executable code to be transformed according to the invention;
- Figure 2 depicts schematically an example of a system for transforming an executable code according an embodiment of the invention;
- Figure 3 shows a flow chart of the transformation of an executable code according to an example of the invention; and
- Figure 4 depicts schematically an example of an updated executable code functionally equivalent to the original executable code of Figure 1.

### (Detailed description of the preferred embodiments)

In the description detailed below, reference is made to the accompanying drawings that show, by way of illustration, specific embodiments in which the invention may be practiced. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims. The invention aims at securing a compiled software code. Compiling translates a source code, written in a high-level programming language such as C or Fortran, into an object code written in a low level language, such as machine code which takes into account the hardware implementation of the system on which the code is supposed to be executed.

A first aspect of the invention is an obfuscation method for transforming a compiled software code before its execution. Such a securing method is performed by a system treating the compiled software code comprising many computer code instructions. The system generates an updated executable code from the original executable code. The updated executable code is more robust to reverse-engineering attacks. It is to be noted that both the original executable code and the updated executable code provide the same results (i.e. services delivered to the calling entity) when running. In other words, both the original executable code and the updated executable code are functionally equivalent. The updated executable code is intended to be executed on an execution device similar to the one which can run the original executable code. The execution device may be a PC, a smart card, a secure element, a mobile device such as a smartphone or a tablet, a public terminal in a point of sale or any computer machine targeted by the compiler used to generate the original executable code.

The system is a securing device which may be any electronic device including a hardware processor and a memory. For example it may be a personal computer on which a development environment was installed.

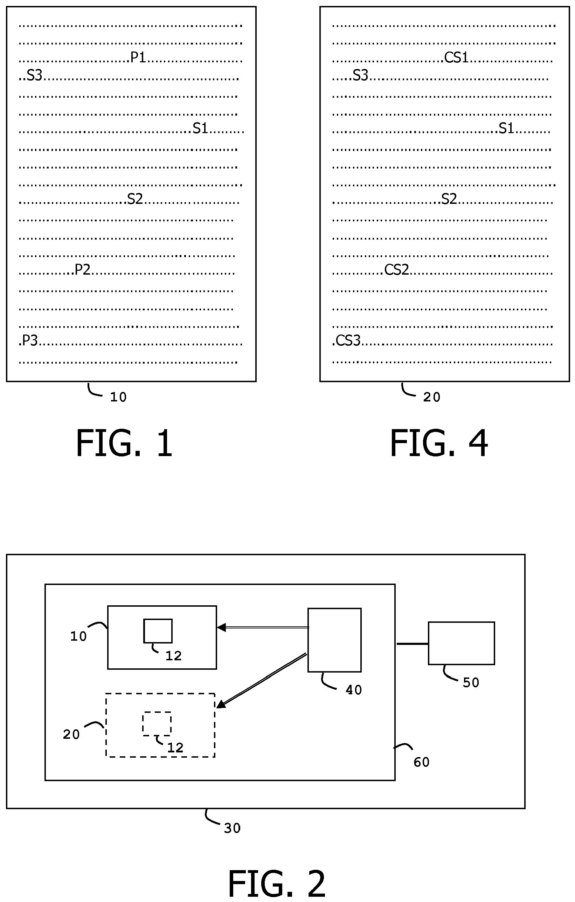

**Figure 2** describes an exemplary embodiment of such a system 30 comprising a processor 50, and a software application 40 stored in a non-volatile memory 60 of the system 30. Although not shown at Figure 2, the system 30 may include a volatile memory (ex: RAM), a communication unit such as an Ethernet or Wi-Fi network adapter, a display and user input means like a keyboard and a mouse. The system 30 stores the software code 10 (i.e. executable code) to be secured. The updated software code 20 (i.e. updated executable code) obtained after transformation by the system 30 can also be stored in the non-volatile memory 60 of the system 30.

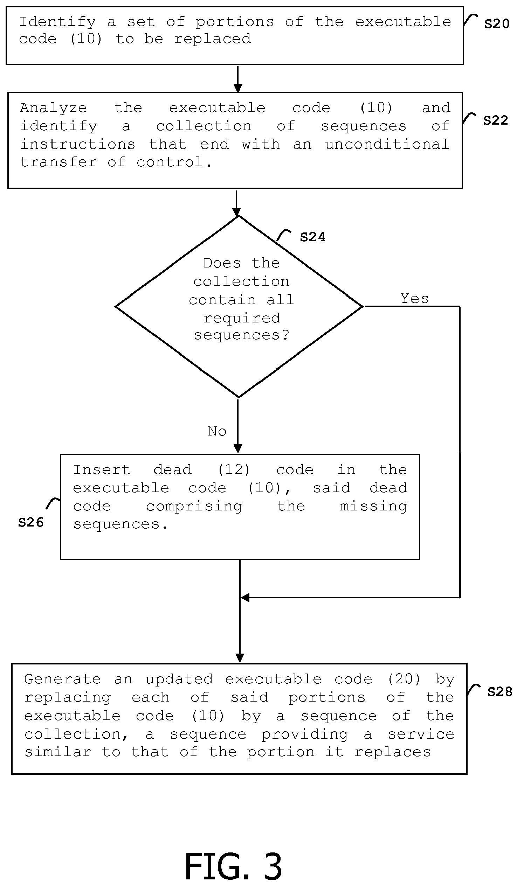

**Figure 3** shows a flow chart of the transformation of the executable code 10 according to an example of the invention.

In this example, the executable code 10 is stored in the memory 60 of the system 30 as described at Figure 2.

At step S20, a plurality of portions of original executable code 10 are identified. Each portion contains at least one executable instruction. The identified portions are gathered in a set. The selection of these portions is carried out using predefined rules. For instance, the portions may focus on critical or sensitive parts of the executable code 10. The portions may focus on the parts of the executable code 10 that are most (or least) frequently executed in usual/nominal operation. The portions may also be selected at random.

Once the set is identified, references of each portions of the set are stored in the memory of the system 30.

At step S22, the system 30 analyzes the executable code 10 and identifies a collection of sequences of instructions that end with an unconditional transfer of control. More precisely, the system 30 searches for sequences whose execution provide an effect (i.e. result) equivalent to execution of the portions of the set.

Advantageously, the system 30 may also search for a sequence functionally equivalent to execution of part of a portion. For instance if an identified portion comprises 3 instructions, the system 30 can find two sequences allocated to this identified portion: one sequence corresponding to the two first instructions of the portion and another sequence corresponding to the last instruction of the portion.

In a software code, instructions normally execute in the order in which they are written. The normal order of execution can be altered by transferring control to another section of a program unit or a subprogram. Change order of execution can be performed thanks to unconditional transfer of control. Unconditional transfer of control is an instruction which change the order of execution each time a certain point is reached in a program unit, without testing any condition. Unconditional transfer of control is any instruction that affect the value of the Program Counter (PC).

For instance, CALL and RET (Return), JUMP and/or BRANCH, MOVE instructions (or any instruction) that have PC as destination register for the operation, are such instructions (but not limited to, as it is dependent of the instruction set of a given processor architecture).

When implementing the invention based on JUMP instructions, it is preferable to use indirect JUMP so that a debugger tool cannot know the JUMP offset until the executable is really executed.

Then at step S24, the system 30 checks if the collection contains all sequences required to treat every portions of the set.

If some sequences are missing, the system 30 can generate a dead code 12 comprising the missing sequences and add this dead code 12 in the executable code 10 at step S26. A dead code 12 is an executable code which is never triggered when running the original executable code. Such a dead code 12 can be scattered at several places in the executable code. Advantageously, the dead code 12 may look like a usual executable code.

Alternatively, the system 30 may decide not to replace the portions for which no corresponding sequence has been found in the original execution code 10. In such a case, there is no need to insert dead code in the original execution code 10.

Then at step S28, the system 30 generates an updated executable code 20 by replacing each of said portions by a call pointing to the starting point of execution of a sequence of the collection so that a sequence provides a function equivalent to that of the portion it replaces. At this point execution of the updated executable code 20 provides final results and effects identical to those of the execution of the original executable code 10.

A portion may also be replaced by a series of sequences belonging to the collection which creates a chain of unconditional jumps. It can be implemented as a ROP chain for example.

It is to be noted that the original code of the portion is removed and does not appear in the updated executable code.

These steps S22 to S28 are performed by the processor 50 of the system 30 running the software application 40. The step S20 can be either manually carried out or performed by the processor 50.

As shown at Figure 2, the system 30 may comprise both the original executable code 10 and the updated executable code 20.

**Figure 1** shows an example of executable code 10 to be transformed according to the invention.

The executable code 10 contains a series of instructions (also named machine instructions) shown by dots. The executable code 10 also contains three portions P1, P2 and P3 which may comprise one or several instructions.

The executable code 10 also contains three sequences S1, S2 and S3 which comprise several instructions. The sequences S1, S2, S3 have been selected to replace the execution of respectively the portions P1, P2 and P3. In this example, no dead code has been inserted in the original executable code 10. It is to be noted that the sequences may have been found at any location inside the original executable code 10. Moreover when the executable code 10 is run, these sequences can execute regardless of whether they are called in place of the corresponding portions.

It is to be noted that even if libraries are linked to the executable code 10, all the selected sequences belong to the executable code 10 only. In other words, no sequence is identified in the libraries. In fact, no sequence is identified outside the executable code 10 itself. (Assuming that he inserted dead code 12 belongs to the executable code 10.)

**Figure 4** shows an example of updated executable code 20 generated according to the invention. Each identified portion P1, P2 and P3 has been replaced with a call CS1, CS2, respectively CS3 to the corresponding sequence S1, S2 respectively S3.

In a preferred embodiment, the sequences are Return Oriented Programming (ROP) gadgets. A ROP gadget is a small instruction sequence ending in a RET (Return) instruction and which is available in the original executable code 10 generated by the compiler (and optionally in a dead code added to the original executable code).

Return Oriented Programming technique has been developed for hacking purpose. By combining several ROP gadgets, and thus creating a so-called "ROP chain", a hacker can perform certain tasks for conducting an attack when running an application containing the ROP gadgets. Many systems and methods for detection and prevention of Return-Oriented-Programming (ROP) attacks in applications have been developed during the last years.

In practice, ROP attacks are implemented based on the linked shared libraries which are available according to the targeted operating system. This is due to the fact that numerous and specific ROP gadgets must be found to build such an attack. An advantage of the invention is to provide a deterministic solution since the sequences of the collection only depend only on the address range in memory of the executable code. In other words, the collection is self-contained vs the executable code.

As an example of the invention let's assume that the following four ROP gadgets have been identified in the original executable code and are available in the collection:

| | |
|---|---|
| **Gadget G1:** | **Gadget G2:** |
| pop a; | pop b; |
| ret; | ret; |
| | |
| **Gadget G3:** | **Gadget G4:** |
| mul a*b; | pop a; |
| ret; | pop b; ret; |

Assuming that the function Multi(a,b) is originally implemented as follows:

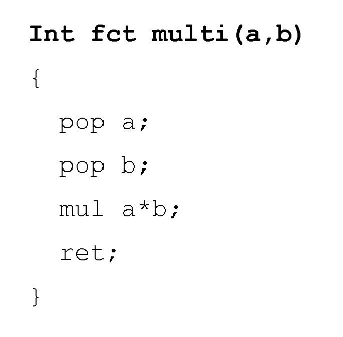

Consequently, the original executable of the code function "multi" can be replaced with the following chain of ROP gadgets: G1, G2 and G3. In other words, the original function "multi" can be replaced with the series:

```
     {
     push @G3;
     push @G2;
     push @G1;
     ret;
     }
```

where @Gn stands for the address of the ROP gadget Gn.

It is to be noted that a ROP gadget can be included in several ROP chains. In other words, a ROP gadget can be used to replace several portions of the original executable code.

In another embodiment, the sequences are Jump Oriented Programming (JOP) gadgets. A JOP gadget is a small instruction sequence ending in a Jump instruction and which is available in the original executable code 10 generated by the compiler.

Both ROP and JOP are examples of "Branch Oriented Programming".

Advantageously, a single original executable code may lead to several versions of updated executable code by using different settings. (E.g. different identified portions, different sequences allocated to a unique portion, or different chains of sequences allocated to a unique portion.)

The invention allows changing the appearance of an executable code. Such modifications render the final executable code more complex to analyze by reverse-engineering.

When using gadget chains, the invention generates an update executable code which shows a high number of indirections to short sequences. Thanks to the invention, the targeted functions (portions) appear to be destructured since the complexity level of the control flow graph has been dramatically increased and code linearity has been broken.

Moreover when ROP gadgets are used, the invention generates an updated executable code which contains elements (ROP gadgets) which can be detected as wrong elements and rejected by security tools. The ROP gadgets of the generated executable code will not appear as legal control blocks and the protected control block will appear as something owning dead code after the first Ret (Return) instruction has been encountered by an analyzing tool. Thus the invention helps to deceive a possible attacker. Moreover the effort to implement is big for an attacker because conventional tools (like debuggers) need to be dramatically modified.

An advantage of the invention is that the developer of the original application does not need to take care of any specific design or implementation rules when developing an application.

The invention is not restricted to applications whose executable code is stored in a single file. It may apply to any self-contained executable code even if split in several files.

It must be understood, within the scope of the invention, that the above-described embodiments are provided as non-limitative examples.

The invention is not limited to the described embodiments or examples. In particular, the features described in the presented embodiments and examples may be combined.

The architecture of the system 30 shown at Figure 2 is provided as examples only. This architectures may be different.

## Claims

1. A method for transforming an executable code (10), said method comprising a step of identifying a set of portions (PI, P2, P3) of said executable code to be replaced,
**characterized in that** said method comprises the following steps:
- automatically analyzing the executable code and identifying a collection of sequences (S1, S2, S3) of instructions that end in an unconditional transfer of control, said sequences being included in the executable code only,
- generating an updated executable code (20) by replacing each of said portions by an entity which may be either an indirection to one of said sequences or a series of indirections to sequences of the collection, the entity providing an equivalent functionality to that of the portion it replaces.

2. The method according to claim 1, wherein said method comprises the step of inserting a dead code (12) in the executable code (10) when generating said executable code (10) and wherein at least one of said sequences belongs to the dead code (12).

3. The method according to claim 1 or 2, wherein said sequences are Return Oriented Programming gadgets.

4. The method according to claim 1 or 2, wherein said sequences are Jump Oriented Programming gadgets.

5. A device including a non-volatile memory **characterized in that** said non-volatile memory comprises the updated executable code generated according to claim 1.

6. A system (30) for transforming an executable code (10) in which a set of portions to be replaced has been identified,
**characterized in that** said system comprises a software application (40) configured to automatically analyze the executable code and to identify a collection of sequences of instructions that ends in an unconditional transfer of control, said sequences belonging to the executable code only, and **in that** the software application is configured to generate an updated executable code (20) by replacing each of said portions by an entity which may be either an indirection to one of said sequences or a series of indirections to sequences of the collection, the called entity providing an equivalent functionality to that of the portion it replaces.

7. The system according to claim 6, wherein said software application is configured to check whether the collection of sequences is sufficient to perform replacement of all the portions of the set and to insert a dead code (12) comprising the missing sequences in the executable code (10).

8. The system according to claim 6 or 7, wherein said sequences are Return Oriented Programming gadgets.

9. The system according to claim 6 or 7, wherein said sequences are Jump Oriented Programming gadgets.
